# EUROPÄISCHE PATENTANMELDUNG

(11) **EP 3 442 117 A1**
(43) Veröffentlichungstag der Anmeldung: **13.02.2019**
(21) Anmeldenummer: 18187348.0
(22) Anmeldetag: 03.08.2018
(51) Int. Cl.: H02S 40/38

(54) **VORRICHTUNG MIT EINER TRÄGEREINRICHTUNG FÜR EIN FUNKTIONSMODUL UND HERSTELLUNGSVERFAHREN HIERFÜR**

(30) Priorität: 11.08.2017 DE 102017118334
(71) Anmelder: EnBW Energie Baden-Württemberg AG, 76131 Karlsruhe (DE)
(72) Erfinder: Die Erfindernennung liegt noch nicht vor
(74) Vertreter: DREISS Patentanwälte PartG mbB

(57) **Zusammenfassung**

Die Erfindung betrifft eine Vorrichtung (100) mit wenigstens einer Trägereinrichtung (110) zur Befestigung wenigstens eines Funktionsmoduls (120), dadurch gekennzeichnet, dass die Vorrichtung (100) wenigstens ein flexibles Photovoltaikelement (130) zur elektrischen Energieversorgung wenigstens einer Komponente (110, 120) der Vorrichtung (100) aufweist.

## Beschreibung

Die Erfindung betrifft eine Vorrichtung mit wenigstens einer Trägereinrichtung zur Befestigung wenigstens eines Funktionsmoduls.

Die Erfindung betrifft ferner ein Herstellungsverfahren für eine derartige Vorrichtung.

Vorrichtungen der eingangs genannten Art sind bekannt und werden beispielsweise zur Straßenbeleuchtung eingesetzt. In diesem Fall weist das Funktionsmodul eine Leuchte auf, die für den Betrieb der Vorrichtung üblicherweise an ein Stromnetz angeschlossen wird.

Nachteilig weist der Ausbau eines Stromnetzes je nach Region und Land einen stark unterschiedlichen Ausbaugrad auf. Sofern im Bereich des geplanten Einsatzortes der bekannten Vorrichtung kein Stromnetz vorhanden ist, muss zunächst die erforderliche Infrastruktur geschaffen werden. Für die Herstellung eines Stromnetzes zum Anschluss weniger Leuchten können bereits erhebliche Kosten entstehen, welche unter anderem durch die hiermit verbundenen Tiefbauarbeiten bedingt sind. Zudem weisen die herkömmlichen Vorrichtungen mit ihrer festen Anbindung an das Stromnetz eine geringe Flexibilität auf.

Demgemäß ist es Aufgabe der vorliegenden Erfindung, eine Vorrichtung und ein Verfahren der eingangs genannten Art dahingehend zu verbessern, dass der Gebrauchsnutzen gesteigert und die Flexibilität erhöht wird.

Bei der Vorrichtung der eingangs genannten Art wird diese Aufgabe erfindungsgemäß dadurch gelöst, dass die Vorrichtung wenigstens ein flexibles (also z.B. biegbares) Photovoltaikelement zur elektrischen Energieversorgung wenigstens einer Komponente der Vorrichtung aufweist. Das flexible Photovoltaikelement kann vielseitig bei der Vorrichtung eingesetzt und insbesondere auch an unterschiedliche Konfigurationen der Vorrichtung angepasst werden. Insbesondere lässt sich die Form des flexiblen Photovoltaikelements ggf. auch noch in Einbaulage an der Vorrichtung ändern, z.B. mittels Biegen.

Bei bevorzugten Ausführungsformen ist vorgesehen, dass das flexible Photovoltaikelement ein CIGS-Photovoltaikelement, kurz "CIGS"-Element, also ein Photovoltaikelement vom CIGS-Typ, ist.

Das CIGS-Photovoltaikelement weist z.B. ein oder mehrere Zellen vom CIGS-Typ auf, wobei "CIGS" einen Absorberwerkstoff aufweisend Kupfer-Indium-Gallium-Diselenid (CIGS) bezeichnet. Bei weiteren bevorzugten Ausführungsformen weist das CIGS-Photovoltaikelement ein oder mehrere kristalline CIGS-Zellen auf.

Bei einer weiteren bevorzugten Ausführungsformen ist vorgesehen, dass das flexible Photovoltaikelement aus ein oder mehreren zusammengeschalteten Si (Silizium)-Photovoltaikelementen besteht, die insbesondere auf flexibler, vor allem biegsamer, PET-Folie aufgebracht sind.

Anderen Ausführungsformen zufolge kann das erfindungsgemäße flexible Photovoltaikelement auch einen anderen Typ als den CIGS-Typ oder Si-Typ aufweisen. Für die nachstehende Beschreibung wird beispielhaft jedoch vorwiegend auf flexible Photovoltaikelemente vom CIGS-Typ eingegangen.

Bei weiteren bevorzugten Ausführungsformen ist das CIGS-Photovoltaikelement in Dünnschichttechnologie gefertigt und weist Schichtdicken kleiner etwa 100 µm (Mikrometer), insbesondere kleiner etwa 10 µm, besonders bevorzugt kleiner etwa 4 µm auf.

Erfindungsgemäß ist erkannt worden, dass CIGS-Photovoltaikelemente bereits einen signifikanten nutzbaren Energieertrag liefern und effizient großtechnisch herstellbar sind, wodurch sich vergleichsweise geringe Fertigungskosten ergeben. Die erfindungsgemäße Vorsehung des wenigstens einen flexiblen Photovoltaikelements, insbesondere CIGS-Elements, bei der erfindungsgemäßen Vorrichtung ermöglicht vorteilhaft einen von einem festen Stromnetz unabhängigen Betrieb einer Vielzahl möglicher elektrischer bzw. elektronischer Verbraucher. Dadurch kann die erfindungsgemäße Vorrichtung vorteilhaft flexibel mit unterschiedlich ausgestalteten Funktionsmodulen eingesetzt werden, deren Einsatzort im Wesentlichen frei wählbar ist. Dies ermöglicht vorteilhaft die Bereitstellung eines autonom modularen Infrastrukturbaukastens ("AMI") unter Verwendung der erfindungsgemäßen Vorrichtung und ein oder mehreren gleichartigen bzw. verschiedenartigen Funktionsmodulen, welche an der Trägereinrichtung der erfindungsgemäßen Vorrichtung wahlweise anbringbar sind. Die betreffenden Funktionsmodule werden hierbei vorteilhaft durch das wenigstens eine CIGS-Element mit elektrischer Energie versorgt. Durch die mechanische Flexibilität des CIGS-Elements ist der Gebrauchsnutzen gegenüber herkömmlichen, starren Photovoltaikmodulen weiter gesteigert.

Bei einer vorteilhaften Ausführungsform ist vorgesehen, dass das wenigstens eine CIGS-Element eine Folie aufweist, zum Beispiel als CIGS-Folie ausgebildet ist. Die CIGS-Folie weist vorteilhaft eine besonders große mechanische Flexibilität auf, wodurch viele Freiheitsgrade zur Anbringung der CIGS-Folie im Bereich der Trägereinrichtung und/oder des Funktionsmoduls gegeben sind. Gleichermaßen vorteilhaft kann die CIGS-Folie im Wesentlichen flexibel an eine Geometrie bzw. Form der Trägereinrichtung und/oder des Funktionsmoduls angepasst werden, so dass große mit der CIGS-Folie versehene Flächen erzielbar sind, was sich positiv auf die maximal erzielbare elektrische Leistung auswirkt.

Bei einer bevorzugten Ausführungsform kann die CIGS-Folie bzw. das CIGS-Element Kupfer-Indium-Gallium-Diselenid zur Ausbildung von photoaktiven Schichten aufweisen. Bei der CIGS-Folie gemäß einer Ausführungsform ist wenigstens eine solche photoaktive Schicht auf einer Trägerfolie angeordnet, welche beispielsweise aus Kunststoff besteht.

Bei einer weiteren bevorzugten Ausführungsform ist vorgesehen, dass das wenigstens eine CIGS-Element, vorzugsweise wiederum eine CIGS-Folie, an der Trägereinrichtung angeordnet ist. Alternativ oder ergänzend kann das wenigstens eine CIGS-Element auch an dem Funktionsmodul angeordnet sein. Weiteren Ausführungsformen zufolge sind auch Konfigurationen denkbar, bei denen ein oder mehrere CIGS-Elemente an der Trägereinrichtung angeordnet sind, und bei denen gegebenenfalls optional ein oder mehrere CIGS-Elemente an dem Funktionsmodul angeordnet sind.

Bei einer weiteren vorteilhaften Ausführungsform ist vorgesehen, dass das wenigstens eine CIGS-Element auf wenigstens einer Außenoberfläche der wenigstens einen Komponente der Vorrichtung angeordnet ist. Beispielsweise kann das CIGS-Element auf einer Außenoberfläche der Trägereinrichtung und/oder einer Außenoberfläche eines Funktionsmoduls angeordnet sein, wodurch die entsprechende Außenoberfläche der betreffenden Komponente vorteilhaft zur elektrischen Energiegewinnung mittels des mindestens einen CIGS-Elements, beispielsweise einer CIGS-Folie, nutzbar ist. Gleichzeitig bildet die Struktur der jeweiligen Komponente bzw. ihre Oberfläche eine Trägerfläche für das CIGS-Element, beispielsweise die CIGS-Folie.

Bei einer weiteren vorteilhaften Ausführungsform ist eine Schutzvorrichtung für das wenigstens eine CIGS-Photovoltaikelement vorgesehen. Die Schutzvorrichtung dient insbesondere zum Schutz des CIGS-Elements vor mechanischer Beschädigung und kann hierzu beispielsweise als transparente bzw. transluzente Folie ausgebildet sein. Alternativ oder ergänzend sind auch Acrylverglasungen denkbar. Besonders vorteilhaft kann die Schutzvorrichtung auch eine schmutzabweisende Oberfläche aufweisen, sodass z.B. in Verbindung mit Niederschlagswasser beispielsweise eine selbstreinigende Wirkung gegeben ist.

Bei einer weiteren vorteilhaften Ausführungsform ist vorgesehen, dass die Trägereinrichtung wenigstens ein Tragelement aufweist. Besonders bevorzugt kann das Tragelement beispielsweise aus Kunststoff und/oder Metall und/oder Holz und/oder Beton bestehen. Bei einer bevorzugten Ausführungsform kann als Trägereinrichtung ein Ständerwerk beispielsweise bestehend aus Holzpfosten errichtet werden. Alternativ oder ergänzend sind Ständerwerke aus wenigstens einem Metallrohr, insbesondere Rundrohr oder Rechteckrohr bzw. Quadratrohr, denkbar. Weiter alternativ oder ergänzend sind Ständerwerke denkbar, die zumindest teilweise aus Kunststoffmaterial bestehen. Kombinationen der vorstehend genannten Maßnahmen sind weiteren Ausführungsformen zufolge ebenfalls denkbar zur Ausbildung der Trägereinrichtung.

Bei einer weiteren vorteilhaften Ausführungsform ist wenigstens ein elektrischer Energiespeicher im Bereich der Trägereinrichtung vorgesehen. Besonders bevorzugt weist die Trägereinrichtung wenigstens einen elektrischen Energiespeicher auf, der beispielsweise in einem Innenraum der Trägereinrichtung angeordnet sein kann. Beispielsweise kann der elektrische Energiespeicher einer Ausführungsform zufolge in einem Innenraum eines Rechteck- bzw. Rundrohrs der Trägereinrichtung angeordnet sein, wodurch ein vergleichsweise großes Bauvolumen zur Anordnung des elektrischen Energiespeichers zur Verfügung steht, das die Bereitstellung einer vergleichsweise hohen elektrischen Kapazität ermöglicht. Zudem ist der elektrische Energiespeicher in dem Innenraum geschützt vor äußeren Einflüssen.

Bei einer Ausführungsform weist der elektrische Energiespeicher wenigstens einen Akkumulator auf. Alternativ oder ergänzend kann der elektrische Energiespeicher auch eine Kondensatoreinrichtung aufweisen, die beispielsweise über einen oder mehrere Kondensatoren, insbesondere Doppelschichtkondensatoren ("ultracaps"), verfügen kann. Optional kann eine Ladevorrichtung vorhanden sein, die mittels des CIGS-Elements erhaltene elektrische Energie ggf. in eine für den elektrischen Energiespeicher geeignete Form (Strom / Spannung) konvertiert, z.B. zum Aufladen des elektrischen Energiespeichers.

Bei einer weiteren vorteilhaften Ausführungsform ist vorgesehen, dass die Trägereinrichtung ein Gründungselement oder einen Standfuß aufweist. Insbesondere kann die Trägereinrichtung wenigstens eine der folgenden Komponenten aufweisen: ein Fundament, insbesondere Betonfundament, einen Betonring, eine Bohrkopfspitze, Betonschrauben, einen Drahtkorb für eine Steinfüllung, ein Gefäß zur Aufnahme eines Ballastmediums, insbesondere Wasser. Dadurch sind vorteilhaft viele unterschiedliche Befestigungsformen für die Trägereinrichtung bzw. ein hierdurch realisiertes Ständerwerk angegeben, sodass die erfindungsgemäße Vorrichtung und ihre Trägereinrichtung an eine Vielzahl von Einsatzzwecken anpassbar ist. Insbesondere ermöglichen die vorstehend genannten Erfindungsaspekte eine flexible stationäre oder zeitweise Aufstellung der erfindungsgemäßen Vorrichtung auf befestigten Untergründen wie beispielsweise Straßen oder mit Pflaster versehenen Bereichen, unbefestigten Untergründen wie beispielsweise Wiesen oder Waldboden, und dergleichen.

Bei einer weiteren vorteilhaften Ausführungsform ist vorgesehen, dass wenigstens ein elektrischer Energiespeicher (z.B. Akkumulator) im Bereich des Gründungselements bzw. Standfußes vorgesehen ist. Bei dieser Konfiguration kann der Energiespeicher vorteilhaft zur mechanischen Stabilisierung der Trägereinrichtung bzw. der gesamten Vorrichtung dienen.

Bei weiteren Ausführungsformen ist auch denkbar, einen ersten elektrischen Energiespeicher im Bereich des Gründungselements bzw. Standfußes vorzusehen, und mindestens einen zweiten elektrischen Energiespeicher im Bereich der Trägereinrichtung, insbesondere im Bereich wenigstens eines Tragelements der Trägereinrichtung, vorzusehen.

Bei einer weiteren vorteilhaften Ausführungsform ist vorgesehen, dass die Trägereinrichtung wenigstens eine Befestigungseinrichtung zur Befestigung des wenigstens einen Funktionsmoduls aufweist. Besonders bevorzugt dient die Befestigungseinrichtung dabei zur lösbaren Befestigung des wenigstens einen Funktionsmoduls, sodass bei Bedarf ein erstes Funktionsmodul gegen ein zweites Funktionsmodul getauscht werden und damit die erfindungsgemäße Vorrichtung hinsichtlich ihrer Funktion an einen gewünschten Einsatzzweck angepasst werden kann.

Besonders bevorzugt ist die Befestigungseinrichtung dazu ausgebildet, eine mechanische und elektrische Verbindung zwischen der Trägereinrichtung und dem Funktionsmodul herzustellen, sodass einerseits eine sichere Halterung des Funktionsmoduls an der Trägereinrichtung gegeben ist, und andererseits gleichzeitig die Herstellung einer elektrischen Verbindung zwischen beispielsweise einem elektrischen Energiespeicher der Trägereinrichtung und dem betreffenden Funktionsmodul ermöglicht ist.

Bei einer weiteren vorteilhaften Ausführungsform ist vorgesehen, dass die Vorrichtung wenigstens ein Funktionsmodul aufweist, wobei das Funktionsmodul wenigstens eine der folgenden Komponenten aufweist: eine Leuchte, einen Zugangspunkt für ein drahtloses Kommunikationssystem, eine Einrichtung zur fotografischen Verkehrsüberwachung, einen Signalgeber, beispielsweise eine Ampel, einer Lichtsignalanlage, eine Sensoreinrichtung, einen Spiegel, einen Fahrkartenautomaten, ein Verkehrsschild, eine Videoüberwachungseinrichtung, eine Absperreinrichtung wie beispielsweise einen Absperrzaun bzw. eine Absperrbake, eine Anzeigevorrichtung wie beispielsweise einen Bildschirm.

Bei einer weiteren vorteilhaften Ausführungsform ist vorgesehen, dass das wenigstens eine flexible, insbesondere CIGS-, Photovoltaikelement bewegbar, insbesondere drehbar, an der Vorrichtung, insbesondere an der Trägereinrichtung, angeordnet ist. Dadurch kann das wenigstens eine CIGS-Photovoltaikelement beispielsweise bei Nichtgebrauch vorteilhaft in eine platzsparende erste Konfiguration versetzt werden, beispielsweise an die Vorrichtung bzw. ihre Trägereinrichtung angelegt werden. In einer weiteren Betriebsart kann das wenigstens eine CIGS-Photovoltaikelement aus der platzsparenden ersten Konfiguration in eine zweite, aktive Konfiguration versetzt werden, in der es beispielsweise von der Vorrichtung bzw. der Trägereinrichtung wegbewegt, beispielsweise ausgeklappt, wird, um zur Energiegewinnung bzw. -wandlung genutzt werden zu können.

Zusätzlich zu drehbar gelagerten Photovoltaikelementen können bei weiteren Ausführungsformen auch noch ein oder mehrere stationär an der Vorrichtung angeordnete Photovoltaikelemente vorgesehen sein. Dabei können die drehbar angeordneten Photovoltaikelemente bei Bedarf zur Leistungssteigerung ausgeklappt werden.

Als eine weitere Lösung der Aufgabe der vorliegenden Erfindung ist ein Verfahren gemäß Patentanspruch 14 angegeben. Das Verfahren weist die folgenden Schritte auf: Bereitstellen der wenigstens einen Trägereinrichtung, Anbringen wenigstens eines flexiblen Photovoltaikelements, insbesondere wenigstens eines CIGS-Photovoltaikelements, zur elektrischen Energieversorgung wenigstens einer Komponente der Vorrichtung an der Vorrichtung, insbesondere an der Trägereinrichtung. Der Schritt des Anbringens kann beispielsweise vorteilhaft das Aufbringen wenigstens einer (CIGS-)Folie auf eine Außenoberfläche der Trägereinrichtung umfassen.

Nachfolgend werden beispielhafte Ausführungsformen der Erfindung unter Bezugnahme auf die Zeichnung erläutert. In der Zeichnung zeigt:
- Figur 1: schematisch eine Seitenansicht einer Ausführungsform einer erfindungsgemäßen Vorrichtung,
- Figur 2A: ein Tragelement gemäß einer Ausführungsform,
- Figur 2B: ein Tragelement gemäß einer weiteren Ausführungsform,
- Figur 3: ein vereinfachtes Flussdiagramm einer Ausführungsform des erfindungsgemäßen Verfahrens,
- Figur 4: schematisch eine Seitenansicht einer Vorrichtung gemäß einer weiteren Ausführungsform,
- Figur 5A: schematisch eine Draufsicht auf eine weitere Ausführungsform,
- Figur 5B: schematisch eine Seitenansicht eines CIGS-Photovoltaikelements der Ausführungsform gemäß Figur 5A, und
- Figur 6: schematisch eine Draufsicht auf eine weitere Ausführungsform.

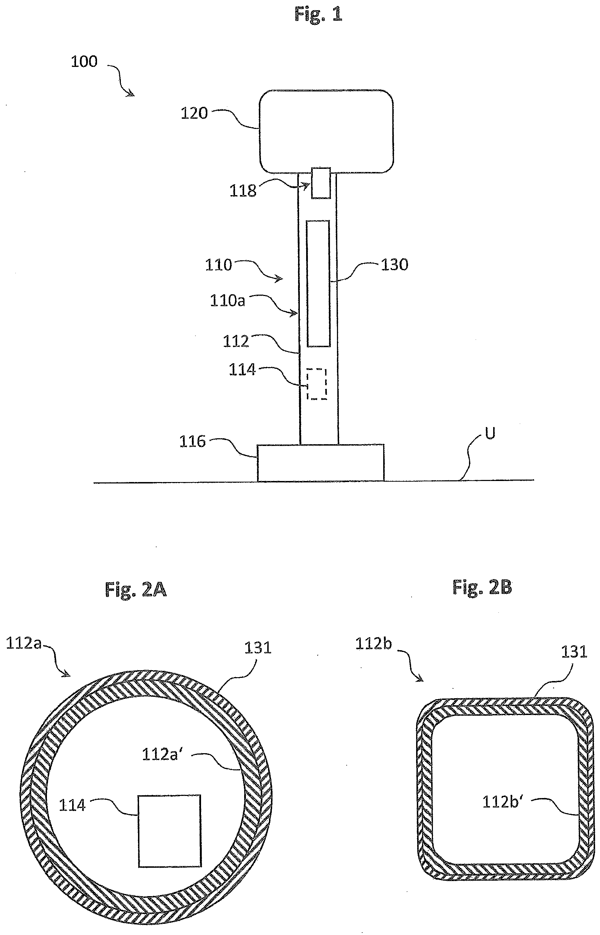

Figur 1 zeigt schematisch eine Seitenansicht einer Ausführungsform einer erfindungsgemäßen Vorrichtung 100, die eine Trägereinrichtung 110 zur Befestigung wenigstens eines Funktionsmoduls 120 aufweist. Vorliegend weist die Trägereinrichtung 110 ein Tragelement 112 auf, bei dem es sich beispielsweise um ein Rohr aus einem metallischen Werkstoff handeln kann, beispielsweise um ein Rechteckrohr aus verzinktem Stahl.

Erfindungsgemäß weist die Vorrichtung 100 wenigstens ein flexibles Photovoltaikelement 130 auf, das zur elektrischen Energieversorgung wenigstens einer Komponente 110, 120 der Vorrichtung 100 vorgesehen ist. Besonders bevorzugt ist das Photovoltaikelement 130 als CIGS- Photovoltaikelement ("CIGS-Element") ausgebildet. Bei anderen Ausführungsformen sind flexible Photovoltaikelemente eines anderen Typs als des CIGS-Typs denkbar. Das CIGS-Element 130 kann insbesondere dazu dienen, einen elektrischen oder elektronischen Verbraucher des Funktionsmoduls 120 mit elektrischer Energie zu versorgen.

Bei einer besonders bevorzugten Ausführungsform weist das CIGS-Element 130 eine CIGS-Folie auf bzw. ist aus einer CIGS-Folie gebildet. Besonders bevorzugt ist die CIGS-Folie 130 an der Trägereinrichtung 110 angeordnet, insbesondere auf einer Außenoberfläche 110a der Trägereinrichtung 110, wie dies in Figur 1 schematisch abgebildet ist.

Optional kann eine nicht abgebildete Schutzvorrichtung für das CIGS-Element bzw. die CIGS-Folie 130 vorgesehen sein, die insbesondere zum Schutz vor mechanischer Beschädigung dient. Die Schutzvorrichtung kann beispielsweise aus einer transparenten, vorzugsweise flexiblen und/oder schmutzabweisenden Folie bestehen, oder auch aus einer Acrylverglasung oder einem vergleichbaren transparenten oder zumindest transluzenten Werkstoff, der für den Betrieb des CIGS-Elements 130 benötigte Wellenlängen einer Umgebungsstrahlung, beispielsweise des Tageslichts, zu dem CIGS-Element 130 hindurchdringen lässt.

In der Trägereinrichtung 110, insbesondere in einem Innenraum des Rechteckrohrs 112, ist ein elektrischer Energiespeicher 114 angeordnet, der mittels des CIGS-Elements 130 gewonnene elektrische Energie zumindest zeitweise zwischenspeichern kann und ergänzend oder alternativ zu dem CIGS-Element 130 für die elektrische Energieversorgung wenigstens eines elektrischen bzw. elektronischen Verbrauchers der Vorrichtung 100 nutzbar ist.

Der elektrische Energiespeicher 114 kann beispielsweise einen Akkumulator aufweisen und/oder eine Kondensatoreinrichtung, sowie optional ggf. ein Ladegerät hierfür. Sofern eine Kondensatoreinrichtung verwendet wird, können insbesondere Doppelschichtkondensatoren genutzt werden. Bei einer Ausführungsform kann auch das Funktionsmodul 120 über einen integrierten elektrischen Energiespeicher verfügen.

Bei einer weiteren vorteilhaften Ausführungsform weist die Trägereinrichtung 110 ein Gründungselement oder einen Standfuß 116 auf, mit dem die Vorrichtung 100 sicher auf einem Untergrund U aufgestellt werden kann. Der Standfuß 116 kann insbesondere wenigstens eine der folgenden Komponenten aufweisen: ein Fundament, insbesondere Betonfundament, einen Betonring, eine Bohrkopfspitze, ein oder mehrere Betonschrauben, insbesondere Senkkopf-Betonschrauben für Außenbereiche, einen Drahtkorb für eine Steinfüllung, ein Gefäß zur Aufnahme eines Ballastmediums, insbesondere Wasser. Damit ist die erfindungsgemäße Vorrichtung 100 bzw. der Standfuß 116 flexibel an verschiedene Untergründe U anpassbar und somit für die unterschiedlichsten Einsatzbereiche nutzbar.

Bei einer weiteren vorteilhaften Ausführungsform ist vorgesehen, dass wenigstens ein (zusätzlicher) elektrischer Energiespeicher im Bereich des Gründungselements bzw. Standfußes 116 vorgesehen ist. Bei dieser Konfiguration kann der Energiespeicher vorteilhaft zur mechanischen Stabilisierung der Trägereinrichtung 110 bzw. der gesamten Vorrichtung 100 dienen und gegebenenfalls eine elektrische Speicherkapazität eines im Bereich des Tragelements 112 vorhandenen Energiespeichers 114 ergänzen.

Bei weiteren Ausführungsformen ist auch denkbar, einen ersten elektrischen Energiespeicher im Bereich des Gründungselements bzw. Standfußes 116 vorzusehen, und mindestens einen zweiten elektrischen Energiespeicher im Bereich der Trägereinrichtung, insbesondere im Bereich wenigstens eines Tragelements 112 der Trägereinrichtung, vorzusehen.

Bei einer weiteren bevorzugten Ausführungsform weist die Trägereinrichtung 110 wenigstens eine Befestigungseinrichtung 118 auf, mittels der wenigstens ein Funktionsmodul 120 an der Trägereinrichtung 110 befestigt werden kann. Besonders bevorzugt ist die Befestigungseinrichtung 118 dazu ausgebildet, eine lösbare Befestigung des Funktionsmoduls 120 bzw. mehrerer Funktionsmodule 120 zu realisieren.

Bei einer weiteren bevorzugten Ausführungsform ist die Befestigungseinrichtung 118 dazu ausgebildet, neben einer mechanischen Verbindung der Komponenten 110, 120 vorteilhaft gleichzeitig auch eine elektrische Verbindung zwischen den Komponenten 110, 120 herzustellen. Auf diese Weise kann beispielsweise vorteilhaft mindestens ein elektrischer bzw. elektronischer Verbraucher (nicht gezeigt) des Funktionsmoduls 120 elektrisch mit dem CIGS-Element 130 und/oder dem elektrischen Energiespeicher 114 verbunden werden, die vorliegend in bzw. an der Trägereinrichtung 110 angeordnet sind.

Bei weiteren Ausführungsformen kann vorgesehen sein, wenigstens ein CIGS-Element auch im Bereich des Funktionsmoduls 120 bzw. an dem Funktionsmodul 120 anzuordnen. Dies gilt weiteren Ausführungsformen zufolge auch für den elektrischen Energiespeicher.

Das Funktionsmodul 120, das aufgrund seiner in Figur 1 beispielhaft gezeigten Anordnung in einem vertikal oberen Bereich der Trägereinrichtung 110 auch als Kopfsystem bezeichnet werden kann, kann weiteren Ausführungsformen zufolge zur Realisierung unterschiedlicher Funktionalitäten ausgebildet sein.

Bei einer Ausführungsform kann das Funktionsmodul wenigstens eine Leuchte bzw. einen Leuchtenkopf aufweisen. Bei dieser Ausführungsform kann die Vorrichtung 100 somit als flexibel einsetzbare, mobile bzw. quasistationäre Leuchte, zum Beispiel zur Straßenbeleuchtung oder zur Beleuchtung von Parks, Baustellen, sonstigen Außenanlagen, oder auch Innenräumen wie beispielsweise Hallen oder dergleichen, genutzt werden. Eine weitere Anwendungsmöglichkeit ist auf den Gebieten der Fassadenbeleuchtung bzw. Festbeleuchtung ("Eventbeleuchtung") gegeben.

Bei einer weiteren Ausführungsform kann das Funktionsmodul wenigstens einen Zugangspunkt (englisch: access point) für ein drahtloses Kommunikationssystem aufweisen, beispielsweise einen Zugangspunkt für Drahtlosnetzwerke ("WLAN"), insbesondere der Normenfamilie IEEE 802.11, oder dergleichen. Alternativ oder ergänzend können auch sonstige Hochfrequenzsender und/oder Hochfrequenzempfänger und/oder Hochfrequenzsendeempfänger (Transceiver) und/oder Router zur Datenübertragung bzw. Weiterleitung von Daten in einem Funktionsmodul vorgesehen sein.

Bei einer weiteren Ausführungsform kann das Funktionsmodul wenigstens einen Signalgeber einer Lichtsignalanlage, insbesondere eine Ampel, oder auch die komplette Lichtsignalanlage, aufweisen. Optional kann das Funktionsmodul auch über eine Schnittstelle zur Interaktion mit anderen gleichartigen oder verschiedenartigen Signalgebern bzw. Lichtsignalanlagen verfügen.

Bei einer weiteren vorteilhaften Ausführungsform kann das Funktionsmodul auch einen oder mehrere Sensoren aufweisen, beispielsweise Sensoren für die Messung von Umweltgrößen wie beispielsweise Temperatur, Luftdruck, Strahlungsintensität, Schadstoffbelastung der Luft (Partikel, Gase).

Bei einer weiteren vorteilhaften Ausführungsform kann das Funktionsmodul auch Sensorik zur Verkehrsüberwachung und/oder Verkehrszählung aufweisen.

Bei einer weiteren vorteilhaften Ausführungsform kann das Funktionsmodul auch wenigstens einen Spiegel, insbesondere einen beheizbaren Spiegel, aufweisen. Ein derart konfiguriertes Funktionsmodul ist beispielsweise für Eckbebauungen einsetzbar.

Bei einer weiteren vorteilhaften Ausführungsform kann das Funktionsmodul auch einen Fahrkartenautomaten ("Ticketautomaten") aufweisen, wodurch die hiermit ausgestattete Vorrichtung 100 zur Verkehrsraumbewirtschaftung einsetzbar ist.

Bei einer weiteren vorteilhaften Ausführungsform kann das Funktionsmodul wenigstens ein, vorzugsweise beleuchtbares, Hinweisschild bzw. Signalschild aufweisen. Eine hiermit ausgestattete erfindungsgemäße Vorrichtung kann beispielsweise zur Realisierung von Straßenschildern bzw. Ortsschildern oder sonstigen Verkehrsschildern genutzt werden.

Bei einer weiteren vorteilhaften Ausführungsform kann das Funktionsmodul wenigstens eine Videoüberwachungseinrichtung aufweisen. Besonders bevorzugt kann die Videoüberwachungseinrichtung in Kombination mit einer drahtlosen Schnittstelle zur Datenübertragung genutzt werden, die insbesondere zur Übertragung der aufgenommenen Videodaten an eine entfernte Einrichtung wie beispielsweise eine Videoüberwachungszentrale geeignet ist. Als drahtlose Schnittstelle kommt beispielsweise eine WLAN-Schnittstelle in Betracht oder eine Datenschnittstelle eines Mobilfunkstandards der dritten (3G), vierten (4G, z.B. LTE) oder fünften (5G) Generation.

Bei einer weiteren vorteilhaften Ausführungsform kann das Funktionsmodul einen oder mehrere Informationsbildschirme, also Anzeigevorrichtungen, aufweisen, beispielsweise zur Information von Verkehrsteilnehmern. Mit diesen Informationsbildschirmen sind vorteilhaft Informationen über einen Verkehrs- bzw. Straßenzustand (z.B. Stau, Glätte) oder Notfallsituationen (Ausfall eines Stromnetzes, Naturkatastrophe) effizient einem großen Teilnehmerkreis mitteilbar.

Bei einer weiteren vorteilhaften Ausführungsform kann die erfindungsgemäße Vorrichtung 100 mit einem Funktionsmodul 120, welches beispielsweise wenigstens eine Signalleuchte enthält, vorteilhaft zur Realisierung eines öffentlichen Sammelpunkts für Evakuierungen oder ähnliche Notfallsituationen genutzt werden. Die Signalleuchte funktioniert gleichsam als sog. "eye catcher", um die Aufmerksamkeit von in der Nähe befindlichen Personen auf sich zu ziehen und die entsprechende Signalbotschaft mitteilen zu können. Besonders vorteilhaft funktioniert die vorstehend beschriebene Konfiguration aufgrund der autarken elektrischen Energieversorgung auch in Notsituationen mit Stromausfällen.

Bei weiteren vorteilhaften Ausführungsformen können zwei oder mehr der vorstehend genannten Funktionalitäten gegebenenfalls in einem Funktionsmodul 120 bzw. in separaten Funktionsmodulen miteinander kombiniert und an einer (gemeinsamen) Trägereinrichtung 110 angeordnet werden, wodurch die resultierende Funktionalität der erfindungsgemäßen Vorrichtung 100 entsprechend erweitert wird.

Beispielsweise kann ein Funktionsmodul gemäß einer weiteren Ausführungsform zur fotografischen Verkehrsüberwachung vorgesehen sein und gleichzeitig eine Datenschnittstelle, beispielsweise eine WLAN Schnittstelle, aufweisen, um die bei der fotografischen Verkehrsüberwachung erhaltenen Daten an eine externe Stelle weiterzuleiten.

Bei einer weiteren vorteilhaften Ausführungsform umfasst die erfindungsgemäße Vorrichtung 100 ein Funktionsmodul 120, welches als Drohnenlagerstation ausgebildet ist. Diese Drohnenlagerstation umfasst beispielsweise ein verschließbares Dach, unter welcher eine Drohne gelagert ist. Die Drohnenlagerstation umfasst insbesondere einen Kasten, in welchem die Drohne gelagert ist. Vorteilhaft wird durch das verschließbare Dach bzw. den Kasten ein Schutz gegen Umwelteinflüsse bzw. Beschädigungen der Drohne bereitgestellt. Des Weiteren umfasst die Drohnenlagerstation eine Ladevorrichtung, mit welcher ein Akkumulator der Drohne ladbar ist. In einem Beispiel ist eine Schwimmweste an der Drohne angeordnet, welche beispielsweise im Notfall in der Nähe einer in Not geratenen Person über einem Gewässer wie beispielsweise einem Baggersee abgeworfen werden kann. In einem weiteren Beispiel ist ein mobiler Defibrillator an der Drohne angeordnet und kann im Notfall von der Drohne an eine ausgewählte Position gebracht werden. Mögliche Anwendungsfälle für letzteres Beispiel sind Festivals oder große Ansammlungen von Menschen.

Figur 2A zeigt schematisch einen Querschnitt eines Tragelements 112a gemäß einer Ausführungsform. Das Tragelement 112a weist vorliegend ein Rundrohr 112a' auf, auf dessen Außenoberfläche, die der Manteloberfläche des kreiszylindrischen Rundrohrs entspricht, eine CIGS-Folie 131 angeordnet ist. In einem Innenraum des Tragelements 112a ist schematisch der elektrische Energiespeicher 114 angeordnet, der mit durch die CIGS-Folie 131 gewonnener elektrischer Energie aufgeladen werden kann.

Figur 2B zeigt schematisch einen Querschnitt eines Tragelements 112b gemäß einer weiteren Ausführungsform. Vorliegend weist das Tragelement 112b ein Quadratrohr 112b' auf, auf dessen Außenoberfläche wiederum eine CIGS-Folie 131 angeordnet ist. Aufgrund ihrer vergleichsweise großen Flexibilität kann die CIGS-Folie 131 sehr präzise auf der Außenoberfläche des Quadratrohrs 112b' angeordnet werden, sodass nahezu die gesamte Außenoberfläche des Tragelements 112b zur elektrischen Energiegewinnung basierend auf dem Prinzip der Photovoltaik genutzt werden kann.

Die vorstehend beispielhaft unter Bezugnahme auf Figur 2A, 2B beschriebenen Tragelemente 112a, 112b können vorteilhaft flexibel mit den vorstehend ebenfalls beschriebenen Standfüßen 116 kombiniert werden. Ebenso können ein oder mehrere Funktionsmodule 120, vergleiche Figur 1, an den Tragelementen befestigt werden, um der erfindungsgemäßen Vorrichtung 100 die entsprechende Funktionalität zu verleihen.

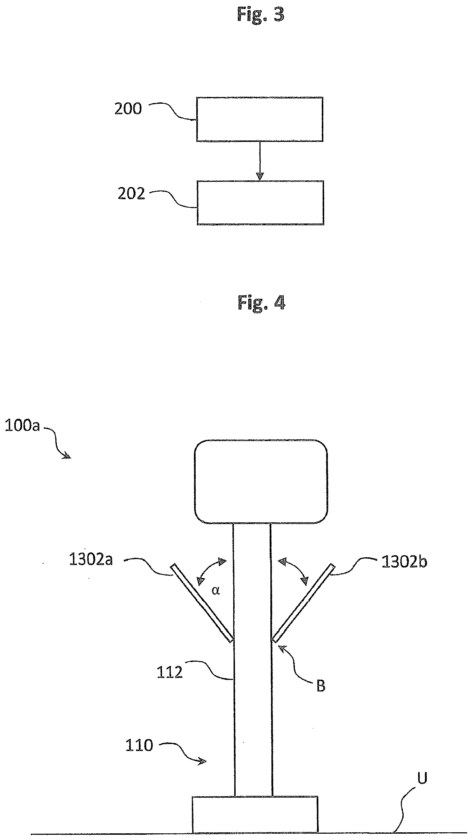

Figur 3 zeigt schematisch ein vereinfachtes Flussdiagramm einer Ausführungsform eines erfindungsgemäßen Herstellungsverfahrens für die erfindungsgemäße Vorrichtung 100. In einem ersten Schritt 200 wird wenigstens eine Trägereinrichtung 110, beispielsweise aufweisend ein Tragelement gemäß Figur 2A oder Figur 2B, bereitgestellt. Sodann wird in einem darauffolgenden zweiten Schritt 202 wenigstens ein flexibles Photovoltaikelement 130, insbesondere ein CIGS-Element 130, (Figur 1) an der Vorrichtung 100, insbesondere an ihrer Trägereinrichtung 110, angebracht.

Figur 4 zeigt schematisch eine Seitenansicht einer Vorrichtung 100a gemäß einer weiteren Ausführungsform. Bei dieser Ausführungsform sind zwei CIGS-Photovoltaikelemente 1302a, 1302b drehbar an dem Trageelement 112 angeordnet und können somit an das Tragelement 112 herangeklappt bzw. von dem Tagelement 112 weggeklappt werden, vergleiche die nicht näher bezeichneten Doppelpfeile. Beispielsweise kann eine Drehachse für das zweite CIGS-Photovoltaikelement 1302b im Bereich B des Tragelements 112 vorgesehen sein. Andere Konfigurationen sind ebenfalls denkbar.

Durch die vorstehend beschriebene Beweglichkeit bzw. Drehbarkeit der CIGS-Photovoltaikelemente 1302a, 1302b können die Photovoltaikelemente beispielsweise bei Nichtgebrauch vorteilhaft in eine platzsparende erste Konfiguration versetzt werden, bei der sie beispielsweise parallel an dem Tagelement 112 anliegen. In einer weiteren Betriebsart können die Photovoltaikelemente aus der platzsparenden ersten Konfiguration in eine zweite, aktive Konfiguration versetzt werden, in der sie beispielsweise von der Vorrichtung bzw. der Trägereinrichtung abgeklappt werden, um zur Energiegewinnung bzw. -wandlung genutzt werden zu können. Bei einer bevorzugten Ausführungsform können die Photovoltaikelemente für die zweite Konfiguration beispielsweise so weit von der Trägereinrichtung 112 abgeklappt werden, dass sie mit der Trägereinrichtung 112 einen Winkel α zwischen etwa 45° und etwa 130° einschließen, besonders bevorzugt einen Winkel zwischen etwa 60° und etwa 90°.

Bei einer bevorzugten Ausführungsform können die CIGS-Photovoltaikelemente 1302a, 1302b jeweils z.B. aus einer Trägerplatte bestehen, auf deren Oberfläche z.B. eine CIGS-Folie angeordnet ist, z.B. mittels Kleben und/oder Klemmen.

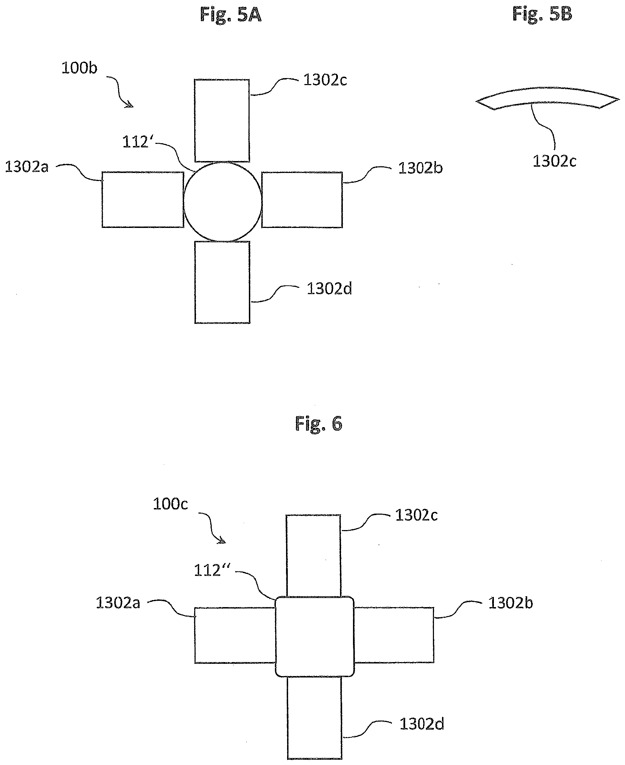

Figur 5A zeigt schematisch eine Draufsicht auf eine weitere Ausführungsform 100b der erfindungsgemäßen Vorrichtung. Insgesamt sind vorliegend vier CIGS-Photovoltaikelemente 1302a, 1302b, 1302c, 1302d vorgesehen, die vorteilhaft alle drehbar an der Trägereinrichtung 112' gelagert sind. Dabei ist in Figur 5A eine zweite, aktive Konfiguration gezeigt, in der die CIGS-Photovoltaikelemente 1302a, 1302b, 1302c, 1302d um einen Winkel von etwa 90° von der Trägereinrichtung 112' abgeklappt sind. Bei weiteren Ausführungsformen können beispielsweise auch weniger als vier Photovoltaikelemente vorgesehen werden, beispielsweise zwei Stück 1302a, 1302b.

Figur 5B zeigt schematisch und nicht maßstabsgetreu eine Seitenansicht eines CIGS-Photovoltaikelements 1302c der Vorrichtung 100b gemäß Figur 5A. Wie aus Figur 5B ersichtlich ist, weist das Photovoltaikelement 1302c eine leichte Wölbung auf, die besonders bevorzugt an die Krümmung der vorliegend im Wesentlichen kreisförmig ausgebildeten Trägereinrichtung 112' (Figur 5A) angepasst ist, sodass es sich beim Heranklappen an die Trägereinrichtung 112' möglichst flächig an die Außenkontur der Trägereinrichtung 112' anlegt und damit eine besonders platzsparende Konfiguration bildet. Die anderen Photovoltaikelemente der Vorrichtung 100b aus Figur 5A können vergleichbar ausgebildet sein.

Figur 6 zeigt schematisch eine Draufsicht auf eine weitere Ausführungsform 100c der erfindungsgemäßen Vorrichtung. Vorliegend weist die Trägereinrichtung 112" im wesentlichen Rechteckform auf, und es sind wiederum vier Photovoltaikelemente 1302a, 1302b, 1302c, 1302d vorgesehen, die wie vorstehend unter Bezugnahme auf Figur 5A beschrieben drehbar an der Trägereinrichtung 112" gelagert sind. Im Unterschied zu der Konfiguration gemäß Figur 5A sind die vier Photovoltaikelemente 1302a, 1302b, 1302c, 1302d der Vorrichtung 100c gemäß Figur 6 nicht gewölbt ausgebildet.

Die erfindungsgemäße Vorrichtung 100, 100a, 100b, 100c ist vorteilhaft flexibel einsetzbar und an einen entsprechenden Einsatzzweck anpassbar, wobei insbesondere jeweils zweckmäßige Funktionsmodule 120 an der Trägereinrichtung 110, vorzugsweise lösbar, befestigbar sind.

Durch die erfindungsgemäße Ausstattung mit wenigstens einem flexiblen Photovoltaikelement, insbesondere einem CIGS-Element 130, vorzugsweise insbesondere einer CIGS-Folie, ggf. auch mit wenigstens einem drehbaren bzw. klappbaren CIGS-Element 1302a, ergibt sich gleichzeitig vorteilhaft eine effiziente Bereitstellung elektrischer Energie für den Betrieb des bzw. der Funktionsmodule 120 und/oder sonstiger Komponenten der Vorrichtung 100, 100a, 100b, 100c, wobei eine zumindest zeitweise Pufferung von elektrischer Energie mittels wenigstens eines optionalen elektrischen Energiespeichers 114 realisierbar ist. Bei anderen Ausführungsformen können anstelle des wenigstens einen CIGS-Elements auch ein oder mehrere flexible Photovoltaikelemente wenigstens eines anderen Typs vorgesehen sein.

Die erfindungsgemäße Vorrichtung 100 kann besonders vorteilhaft auch mit zum Beispiel in urbanen Räumen bereits bestehender Infrastruktur kombiniert werden. Beispielsweise kann ein bestehendes Netz zur Videoüberwachung durch ein oder mehrere erfindungsgemäße Vorrichtungen ergänzt werden, insbesondere auch an Orten, an denen eine Infrastruktur insbesondere zur elektrischen Energieversorgung nicht bereits gegeben ist.

Ganz besonders vorteilhaft kann die erfindungsgemäße Vorrichtung vergleichsweise kostengünstig, flexibel, und insbesondere ohne größere organisatorische bzw. Baumaßnahmen an einem beliebigen Einsatzort vorgesehen werden, beispielsweise durch einen entsprechenden Transport der Vorrichtung an den Einsatzort und das Aufstellen der Vorrichtung 100 an dem Einsatzort.

Im Gegensatz zu bestehenden Ständerwerken bzw. Tragelementen weist die erfindungsgemäße Vorrichtung eine gesteigerte Flexibilität hinsichtlich der Verwendung unterschiedlicher Kopfsysteme bzw. Funktionsmodule 120 auf. Damit ist beispielsweise auch eine flexible Ergänzung von bestehenden öffentlichen Funknetzwerken wie beispielsweise WLAN-Netzen und dergleichen einfach und kostengünstig möglich. Des Weiteren kann der Standort einzelner erfindungsgemäßer Vorrichtungen 100 dynamisch, insbesondere auch während des Betriebs einer Vorrichtung 100, an aktuelle Bedürfnisse wie beispielsweise eine Netzabdeckung, angepasst werden. Beispielsweise können im Vorfeld einer Massenveranstaltung in einem öffentlichen Raum wie beispielsweise auf einem Versammlungsplatz zusätzliche Vorrichtungen 100 zumindest zeitweise aufgestellt werden, um die benötigte Funktionalität mittels entsprechend an den Vorrichtungen angeordneter Funktionsmodule bereitzustellen. Nach der Veranstaltung können die entsprechenden Vorrichtungen wieder zurückgebaut bzw. an sie angebrachte Funktionsmodule durch andere Funktionsmodule ersetzt werden.

Beispielsweise kann unterjährig in einem vorgebbaren Gebiet einer Stadt wie beispielsweise der Innenstadt eine Feinstaubbelastung mittels Umweltsensorik enthaltender Funktionsmodule 120 ermittelt werden, und während der Adventszeit werden die Umweltsensorik enthaltenden Funktionsmodule bzw. wenigstens manche dieser Funktionsmodule ausgetauscht gegen Videoüberwachungssysteme enthaltende Funktionsmodule, beispielsweise um einen Weihnachtsmarkt zeitweise überwachen zu können. Die hierbei anfallenden Daten werden bevorzugt über entsprechende drahtlose Datenschnittstellen der jeweiligen Funktionsmodule an ein oder mehrere externe Empfangseinheiten gesendet, bei denen es sich beispielsweise um stationäre Kommunikationsmodule wie beispielsweise stationäre WLAN access points (APs) handeln kann, die ihrerseits über leistungsfähige kabelgebundene (zum Beispiel Glasfaserleitungen) oder drahtlose Datenverbindungen an ein Computernetzwerk wie beispielsweise das Internet oder ein privates Netzwerk angebunden sind.

Die erfindungsgemäße Vorrichtung 100 ermöglicht in Kombination mit den Funktionsmodulen 120 vorteilhaft die Realisierung eines autonom modularen Infrastrukturbaukastens, dessen Elemente flexibel an verschiedenste Anwendungsbereiche anpassbar sind.

Beispielsweise ergeben sich für Nutzer der erfindungsgemäßen Vorrichtung insbesondere die folgenden Vorteile:
1. Kostenvorteil, da keine aufwändigen Tiefbaumaßnahmen erforderlich sind, um die Vorrichtung mit einer elektrischen Energieversorgung zu versehen,
2.Lageflexibilität, da die Infrastruktur nicht auf ein bereits vorhandenes Stromnetz und/oder Kommunikationsnetz angewiesen ist,
3.Umbauflexibilität: Wenn ein anderes Kopfsystem bzw.
Funktionsmodul 120 benötigt wird, kann dieses einfach ausgetauscht oder modernisiert werden.

Aufgrund der vorstehend genannten Vorteile eignet sich die erfindungsgemäße Vorrichtung und das hierdurch ermöglichte autonom modulare Infrastruktur-Baukastensystem insbesondere auch für Gebiete bzw. Staaten mit einem vergleichsweise geringen Grad eines Netzausbaus betreffend elektrische Energienetze bzw. Kommunikationsnetze. Ferner ist unter Anwendung der erfindungsgemäßen Vorrichtung bzw. des hiermit realisierten Baukastensystems eine effiziente Erhöhung einer Überwachungsdichte von Verkehrsüberwachungssystemen bzw. allgemein Videoüberwachungssystemen ermöglicht.

## Patentansprüche

1. Vorrichtung (100; 100a) mit wenigstens einer Trägereinrichtung (110) zur Befestigung wenigstens eines Funktionsmoduls (120), **dadurch gekennzeichnet, dass** die Vorrichtung (100; 100a) wenigstens ein flexibles Photovoltaikelement (130; 1302a, 1302b, 1302c, 1302d) zur elektrischen Energieversorgung wenigstens einer Komponente (110, 120) der Vorrichtung (100; 100a) aufweist.

2. Vorrichtung (100; 100a) nach Anspruch 1, wobei das wenigstens eine flexible Photovoltaikelement (130; 1302a, 1302b, 1302c, 1302d) vom CIGS-Typ ist.

3. Vorrichtung (100; 100a) nach wenigstens einem der vorstehenden Ansprüche, wobei das wenigstens eine Photovoltaikelement (130; 1302a, 1302b, 1302c, 1302d) eine Folie (131) aufweist.

4. Vorrichtung (100; 100a) nach wenigstens einem der vorstehenden Ansprüche, wobei das wenigstens eine Photovoltaikelement (130; 1302a, 1302b, 1302c, 1302d) an der Trägereinrichtung (110) angeordnet ist.

5. Vorrichtung (100; 100a) nach wenigstens einem der vorstehenden Ansprüche, wobei das wenigstens eine Photovoltaikelement (130; 1302a, 1302b, 1302c, 1302d) auf wenigstens einer Außenoberfläche (110a) der wenigstens einen Komponente (110, 120) der Vorrichtung (100; 100a) angeordnet ist.

6. Vorrichtung (100; 100a) nach wenigstens einem der vorstehenden Ansprüche, wobei eine Schutzvorrichtung für das wenigstens eine Photovoltaikelement (130; 1302a, 1302b, 1302c, 1302d), insbesondere zum Schutz des wenigstens einen Photovoltaikelements (130) vor mechanischer Beschädigung, vorgesehen ist.

7. Vorrichtung (100; 100a) nach wenigstens einem der vorstehenden Ansprüche, wobei die Trägereinrichtung (110) wenigstens ein Tragelement (112) aufweist.

8. Vorrichtung (100; 100a) nach Anspruch 6, wobei das Tragelement (112; 112a; 112b) ein Rohr aufweist, insbesondere ein Rundrohr (112a') oder ein Rechteckrohr (112b').

9. Vorrichtung (100; 100a) nach wenigstens einem der vorstehenden Ansprüche, wobei die Trägereinrichtung (110) wenigstens einen elektrischen Energiespeicher (114) aufweist, insbesondere einen Akkumulator und/oder eine Kondensatoreinrichtung.

10. Vorrichtung (100; 100a) nach wenigstens einem der vorstehenden Ansprüche, wobei die Trägereinrichtung (110) ein Gründungselement oder einen Standfuß (116) aufweist, wobei die Trägereinrichtung (110) insbesondere wenigstens eine der folgenden Komponenten aufweist: ein Fundament, insbesondere Betonfundament, einen Betonring, eine Bohrkopfspitze, eine Betonschraube, einen Drahtkorb zur Aufnahme eines Ballastmediums, insbesondere für eine Steinfüllung, ein Gefäß zur Aufnahme eines Ballastmediums, insbesondere Wasser.

11. Vorrichtung (100; 100a) nach wenigstens einem der vorstehenden Ansprüche, wobei die Trägereinrichtung (110) wenigstens eine Befestigungseinrichtung (118) zur, vorzugsweise lösbaren, Befestigung des wenigstens einen Funktionsmoduls (120) aufweist, wobei bevorzugt die Befestigungseinrichtung (118) dazu ausgebildet ist, eine mechanische und elektrische Verbindung zwischen der Trägereinrichtung (110) und dem Funktionsmodul (120) herzustellen.

12. Vorrichtung (100; 100a) nach wenigstens einem der vorstehenden Ansprüche, wobei die Vorrichtung (100; 100a) wenigstens ein Funktionsmodul (120) aufweist, und wobei das Funktionsmodul (120) wenigstens eine der folgenden Komponenten aufweist: eine Leuchte, einen Zugangspunkt für ein drahtloses Kommunikationssystem, eine Einrichtung zur fotografischen Verkehrsüberwachung, einen Signalgeber insbesondere für eine Lichtsignalanlage, eine Sensoreinrichtung, einen Spiegel, einen Fahrkartenautomaten, ein Verkehrsschild, eine Videoüberwachungseinrichtung, eine Absperreinrichtung, eine Anzeigevorrichtung.

13. Vorrichtung (100; 100a) nach wenigstens einem der vorstehenden Ansprüche, wobei das wenigstens eine Photovoltaikelement (130; 1302a, 1302b, 1302c, 1302d) bewegbar, insbesondere drehbar, an der Vorrichtung (100), insbesondere an der Trägereinrichtung (110), angeordnet ist.

14. Verfahren zur Herstellung einer Vorrichtung (100; 100a) mit wenigstens einer Trägereinrichtung (110) zur Befestigung wenigstens eines Funktionsmoduls (120), **gekennzeichnet durch** die folgenden Schritte: Bereitstellen (200) der wenigstens einen Trägereinrichtung (110), Anbringen (202) wenigstens eines flexiblen Photovoltaikelements (130; 1302a, 1302b, 1302c, 1302d) zur elektrischen Energieversorgung wenigstens einer Komponente (110, 120) der Vorrichtung (100) an der Vorrichtung (100), insbesondere an der Trägereinrichtung (110).
